# EUROPEAN PATENT APPLICATION

(11) **EP 4 603 171 A1**
(43) Date of publication of application: **20.08.2025**
(21) Application number: 23894445.8
(22) Date of filing: 10.11.2023
(51) Int. Cl.: B01D 53/14, B01D 53/62, C01B 32/50, F01K 17/02

(54) **CARBON DIOXIDE RECOVERY SYSTEM**

(30) Priority: 24.11.2022 JP 2022187256
(71) Applicant: Mitsubishi Heavy Industries, Ltd., Tokyo 100-8332 (JP)
(72) Inventor: MIYAMOTO, Osamu, Yokohama-shi, Kanagawa 220-0012 (JP); KAMIJO, Takashi, Yokohama-shi, Kanagawa 220-8401 (JP); WATANABE, Koki, Yokohama-shi, Kanagawa 220-8401 (JP); TSUKAMOTO, Takeshi, Yokohama-shi, Kanagawa 220-8401 (JP); NAGAYASU, Hiromitsu, Tokyo 100-8332 (JP)
(74) Representative: Studio Torta S.p.A.
(86) International application number: PCT/JP2023/040569
(87) International publication number: WO 2024/111436

(57) **Abstract**

A carbon dioxide recovery system comprising: a regeneration tower that releases carbon dioxide from an absorption liquid that has absorbed carbon dioxide; a reboiler that heats the absorption liquid by heat exchange between the absorption liquid in the regeneration tower and a reboiler vapor; a reclaimer that heats the absorption liquid by heat exchange between the absorption liquid supplied from the regeneration tower and a reclaimer vapor to generate an absorption liquid vapor that is a vapor of the absorption liquid; an absorption liquid vapor line for supplying the absorption liquid vapor generated in the reclaimer to the regeneration tower; and a first compressor that compresses the reclaimer vapor before supplying the reclaimer vapor to the reclaimer.

## Description

### Technical Field

The present disclosure relates to a carbon dioxide recovery system.

The present application claims priority based on Japanese Patent Application No. 2022-187256 filed in Japan on November 24, 2022, the contents of which are incorporated herein by reference.

### Background Art

PTL 1 discloses a carbon dioxide recovery system including an absorption tower that brings a gas containing carbon dioxide and an absorption liquid into gas-liquid contact to absorb the carbon dioxide in the absorption liquid, a regeneration tower that releases the carbon dioxide from the absorption liquid by heating the absorption liquid that has absorbed the carbon dioxide in the absorption tower, and a reboiler that heats the absorption liquid in the regeneration tower. The absorption liquid is repeatedly reused between the absorption tower and the regeneration tower, so that the absorption liquid accumulates non-volatile substances such as a contaminant from a gas in gas-liquid contact with the absorption liquid and an absorption liquid degradation product. In order to remove such non-volatile accumulated matter from the absorption liquid, a reclaimer may be provided.

Steam is generally used as a heat source for heating the absorption liquid in the reboiler and the reclaimer. For example, in a case where the carbon dioxide recovery system is provided in a power plant, steam extracted from the power plant can be used as a heat source for heating the absorption liquid.

### Citation List

### Patent Literature

[PTL 1] Japanese Unexamined Patent Application Publication No. 2019-76810

### Summary of Invention

### Technical Problem

Depending on characteristics of the absorption liquid or a configuration of a plant that discharges the gas containing carbon dioxide, a steam pressure required in the reclaimer may be higher than a steam pressure required in the reboiler. However, in such a case, when the steam extracted from the power plant is used as the heat source in the reboiler and the reclaimer, it is necessary to extract the steam having a higher pressure from the power plant, and thus, there is a concern that power generation efficiency in the power plant may decrease.

In view of the above circumstances, an object of at least one embodiment of the present disclosure is to provide a carbon dioxide recovery system capable of suppressing a decrease in operation efficiency of a steam supply source to a carbon dioxide recovery system.

### Solution to Problem

In order to achieve the above object, a carbon dioxide recovery system according to the present disclosure includes a regeneration tower that releases carbon dioxide from an absorption liquid that has absorbed the carbon dioxide; a reboiler that heats the absorption liquid by exchanging heat between the absorption liquid in the regeneration tower and reboiler steam; a reclaimer that heats the absorption liquid by exchanging heat between the absorption liquid supplied from the regeneration tower and reclaimer steam to generate absorption liquid steam, which is steam of the absorption liquid; an absorption liquid steam line for supplying the absorption liquid steam generated by the reclaimer to the regeneration tower; and a first compressor that compresses the reclaimer steam before supplying the reclaimer steam to the reclaimer. Advantageous Effects of Invention

According to the carbon dioxide recovery system of the present disclosure, the first compressor can increase a pressure of the reclaimer steam by compressing the reclaimer steam, and supply the reclaimer steam to the reclaimer. For this reason, since steam having a low pressure can be used as steam supplied from a steam supply source to the carbon dioxide recovery system, it is possible to suppress a decrease in operation efficiency of the steam supply source to the carbon dioxide recovery system.

### Brief Description of Drawings

Fig. 1 is a schematic configuration diagram of a carbon dioxide recovery system according to Embodiment 1 of the present disclosure.
Fig. 2 is a schematic configuration diagram of a carbon dioxide recovery system according to Embodiment 2 of the present disclosure.
Fig. 3 is a schematic configuration diagram of a carbon dioxide recovery system according to Embodiment 3 of the present disclosure.

### Description of Embodiments

Hereinafter, a carbon dioxide recovery system according to embodiments of the present disclosure will be described with reference to the drawings. The embodiments which will be described below show aspects of the present disclosure and do not limit the disclosure, and any change can be made within the scope of the technical idea of the present disclosure.

### (Embodiment 1)

### <Configuration of Carbon Dioxide Recovery System According to Embodiment 1 of Present Disclosure>

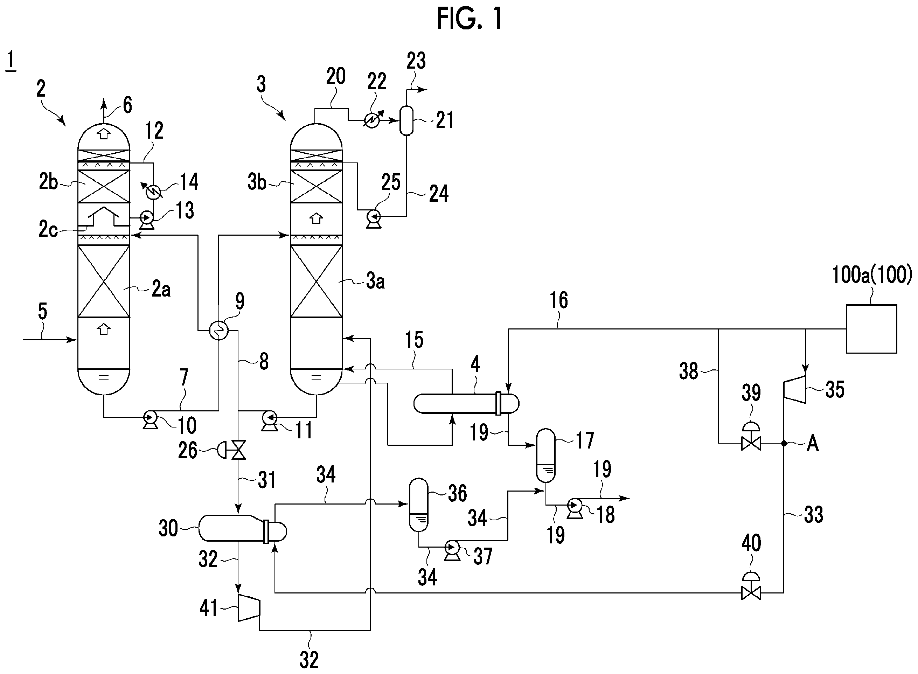

As shown in Fig. 1, a carbon dioxide recovery system 1 according to Embodiment 1 of the present disclosure is for removing and recovering carbon dioxide from a gas (for example, a combustion exhaust gas) containing carbon dioxide discharged from an emission source such as any combustion device. The carbon dioxide recovery system 1 includes an absorption tower 2 that absorbs the gas discharged from the emission source (not shown) into an absorption liquid, a regeneration tower 3 that releases carbon dioxide by heating the absorption liquid that has absorbed the carbon dioxide in the absorption tower 2, and a reboiler 4 for heating the absorption liquid in the regeneration tower 3.

The absorption tower 2 includes an absorption portion 2a that absorbs carbon dioxide in a gas that has flowed into the absorption tower 2, a rinsing portion 2b that is provided above the absorption portion 2a and that rinses the gas rising inside the absorption tower 2 by an operation to be described later, and a chimney tray 2c provided between the absorption portion 2a and the rinsing portion 2b. A gas supply line 5 that communicates with a space below the absorption portion 2a in the absorption tower 2 is connected to the absorption tower 2, and a clean gas line 6 for allowing a gas with a reduced carbon dioxide concentration to flow out as a clean gas is connected to a tower top of the absorption tower 2.

The regeneration tower 3 includes a release portion 3a that releases the carbon dioxide from the absorption liquid that has absorbed the carbon dioxide, and a rinsing portion 3b that is provided above the release portion 3a and that rinses a gas that rises in the regeneration tower 3 by an operation to be described later. The absorption portion 2a, the rinsing portions 2b and 3b, and the release portion 3a can be formed by, for example, a filling layer filled with a filling material of any material.

The absorption tower 2 and the regeneration tower 3 are communicated with each other by a rich absorption liquid line 7 that connects a tower bottom of the absorption tower 2 and a position above the release portion 3a in the regeneration tower 3, and a lean absorption liquid line 8 that connects a tower bottom of the regeneration tower 3 and a position above the absorption portion 2a in the absorption tower 2. As will be described later, a rich absorption liquid, which is an absorption liquid containing a large amount of carbon dioxide, flows through the rich absorption liquid line 7, and a lean absorption liquid, which is an absorption liquid in which carbon dioxide is released from the rich absorption liquid and the carbon dioxide content is relatively lower than that of the rich absorption liquid, flows through the lean absorption liquid line 8. A heat exchanger 9 that exchanges heat between the rich absorption liquid flowing through the rich absorption liquid line 7 and the lean absorption liquid flowing through the lean absorption liquid line 8 is provided, and the heat exchange between the lean absorption liquid and the rich absorption liquid is performed to improve the thermal efficiency of a process. In the rich absorption liquid line 7, a rich absorption liquid pump 10 is provided between the absorption tower 2 and the heat exchanger 9. In the lean absorption liquid line 8, a lean absorption liquid pump 11 is provided between the regeneration tower 3 and the heat exchanger 9.

The absorption tower 2 is provided with a circulation line 12 for circulating a rinse water, which comes into contact with the gas in the rinsing portion 2b by an operation to be described later, extracted from a space below the rinsing portion 2b and returned to a space above the rinsing portion 2b again, and the circulation line 12 is provided with a pump 13 and a cooler 14.

A wet recovery gas line 20 for allowing the gas in the regeneration tower 3 to flow out is connected to a tower top of the regeneration tower 3. A gas-liquid separator 21 is connected to a downstream end of the wet recovery gas line 20. As will be described later, a wet recovery gas, which is the gas flowing out from the regeneration tower 3, is a mixed gas of the carbon dioxide and water vapor generated in the regeneration tower 3. Therefore, the cooler 22 is provided in the wet recovery gas line 20 to separate the water vapor from the wet recovery gas. One end of a dry recovery gas line 23 and one end of a condensate line 24 are connected to the tower top and the tower bottom of the gas-liquid separator 21, respectively. As will be described later, a dry recovery gas, which is the gas flowing out from the tower top of the gas-liquid separator 21, is a gas in which carbon dioxide is a main component. Therefore, the other end of the dry recovery gas line 23 is connected to a device (not shown) for consuming or storing carbon dioxide. The other end of the condensate line 24 is connected to the regeneration tower 3 above the rinsing portion 3b, and the condensate line 24 is provided with a pump 25.

The regeneration tower 3 is provided with a circulation line 15 for circulating the lean absorption liquid stored in the tower bottom in the regeneration tower 3, so that the lean absorption liquid is extracted from the regeneration tower 3 and returned to the regeneration tower again. The reboiler 4 is provided in the circulation line 15, so that the lean absorption liquid is configured to pass through the reboiler 4 when the lean absorption liquid flows through the circulation line 15. In order to exchange heat between the lean absorption liquid and the reboiler steam in the reboiler 4, one end of a reboiler steam line 16 for supplying the reboiler steam to the reboiler 4 is connected to the reboiler 4. The other end of the reboiler steam line 16 is connected to a steam supply source 100 for the carbon dioxide recovery system 1, for example, a steam turbine 100a provided in a power generation facility. That is, the reboiler steam is supplied from the steam turbine 100a to the carbon dioxide recovery system 1 via the reboiler steam line 16. Therefore, in Embodiment 1, the reboiler steam is the steam extracted from the steam turbine 100a. A condensate line 19 for allowing the condensate of the reboiler steam after heat exchange with the absorption liquid to flow out from the reboiler 4 is connected to the reboiler 4. A condensate drum 17 is provided in the condensate line 19, and a condensate pump 18 is provided on a downstream side of the condensate drum 17.

As will be described later, the absorption liquid is repeatedly used between the absorption tower 2 and the regeneration tower 3, so that the lean absorption liquid accumulates non-volatile substances such as a contaminant from a gas in gas-liquid contact in the absorption tower 2 and an absorption liquid degradation product. In order to remove such non-volatile accumulated matter from the lean absorption liquid, the carbon dioxide recovery system 1 is provided with a reclaimer 30. The reclaimer 30 is connected to a downstream end of a branch line 31 branched from the lean absorption liquid line 8 between the lean absorption liquid pump 11 and the heat exchanger 9. The branch line 31 is provided with a flow regulation valve 26 for regulating a flow rate of the lean absorption liquid flowing through the branch line 31. Instead of the branch line 31, a line for extracting the lean absorption liquid from the tower bottom of the regeneration tower 3 may be separately provided, the reclaimer 30 may be connected to a downstream end of the line, and the flow regulation valve 26 may be provided in the line. As will be described later, the absorption liquid is heated to generate steam of the absorption liquid (absorption liquid steam) in the reclaimer 30. However, in order to supply the absorption liquid steam to the regeneration tower 3, one end of an absorption liquid steam line 32 is connected to the reclaimer 30. The other end of the absorption liquid steam line 32 is connected to the regeneration tower 3 below the release portion 3a.

In Embodiment 1, the reclaimer steam, which is a heat source for heating the absorption liquid in the reclaimer 30, is a part of the reboiler steam before being supplied to the reboiler 4. For this reason, a reclaimer steam line 33 branched from the reboiler steam line 16 is connected to the reclaimer 30. In addition, a condensate line 34 for allowing a condensate of the reclaimer steam after heat exchange with the absorption liquid to flow out from the reclaimer 30 is connected to the reclaimer 30. The condensate line 34 is connected to the condensate line 19 between the condensate drum 17 and the condensate pump 18.

The reclaimer steam line 33 is provided with a first compressor 35 for compressing the reclaimer steam, which is a part of the reboiler steam before being supplied to the reboiler 4. The first compressor 35 need not have a flow regulation function, or may have a flow regulation function by including a rotation speed control device, an inlet damper, or the like. The condensate line 34 is provided with a condensate drum 36 and a condensate pump 37. A communication line 38 is provided to allow the reboiler steam line 16 and the reclaimer steam line 33 on the downstream side of the first compressor 35 to communicate with each other. The communication line 38 is provided with a first flow regulation valve 39, which is a first flow regulation device for regulating a flow rate of the reclaimer steam flowing through the communication line 38. A second flow regulation valve 40, which is a second flow regulation device for regulating the flow rate of the reclaimer steam flowing through the reclaimer steam line 33, is provided in the reclaimer steam line 33 on a downstream side of the connection portion A between the reclaimer steam line 33 and the communication line 38. Although not essential, a second compressor 41 for compressing the absorption liquid steam may be provided in the absorption liquid steam line 32.

### <Operation of Carbon Dioxide Recovery System According to Embodiment 1 of Present Disclosure>

Next, an operation of the carbon dioxide recovery system 1 according to Embodiment 1 of the present disclosure will be described. The gas (gas containing carbon dioxide) that has flowed into the absorption tower 2 via the gas supply line 5 rises in the absorption tower 2. As will be described later, the lean absorption liquid flows into the absorption tower 2 via the lean absorption liquid line 8 and falls inside the absorption tower 2. In the absorption portion 2a, the rising gas and the falling lean absorption liquid come into gas-liquid contact with each other, so that the carbon dioxide contained in the gas is absorbed by the lean absorption liquid, and at least a part of the carbon dioxide is removed from the gas. The absorption liquid that has absorbed the carbon dioxide by such an operation stays at the bottom portion of the absorption tower 2 as a rich absorption liquid. The rinse water flows out from the absorption tower 2 by the pump 13, flows through the circulation line 12, is cooled by the cooler 14, is returned to the inside of the absorption tower 2 again, and falls inside the rinsing portion 2b. The rinse water comes into gas-liquid contact with a gas from which at least a part of the carbon dioxide is removed when falling inside the rinsing portion 2b, and thus an absorption liquid mist contained in the gas is recovered. The rinse water that has fallen from the rinsing portion 2b stays on the chimney tray 2c and flows through the circulation line 12 again by the pump 13. The gas flowing out from the rinsing portion 2b flows out from the absorption tower 2 as a clean gas via the clean gas line 6.

The rich absorption liquid in the absorption tower 2 is extracted from the tower bottom of the absorption tower 2 by the rich absorption liquid pump 10 and flows through the rich absorption liquid line 7. The rich absorption liquid flowing through the rich absorption liquid line 7 is heated by exchanging heat with the lean absorption liquid flowing through the lean absorption liquid line 8 in the heat exchanger 9, and then flows into the regeneration tower 3. The rich absorption liquid that has flowed into the regeneration tower 3 falls inside the regeneration tower 3. The rich absorption liquid is heated by coming into contact with saturated steam generated by an operation to be described later and rising inside the release portion 3a when falling inside the release portion 3a. **In** this manner, at least a part of the carbon dioxide is released from the rich absorption liquid, and the rich absorption liquid becomes the lean absorption liquid and stays at the tower bottom of the regeneration tower 3. When the lean absorption liquid in the regeneration tower 3 is extracted from the regeneration tower 3 and flows through the circulation line 15, the lean absorption liquid is heated by exchanging heat with the reboiler steam supplied to the reboiler 4 in the reboiler 4, and is returned to the regeneration tower 3. Accordingly, a temperature of the lean absorption liquid in the regeneration tower 3 rises, so that the carbon dioxide is released from the lean absorption liquid, the water evaporates, and the saturated steam containing mainly the carbon dioxide and the water vapor rises in the regeneration tower 3.

**In** the reboiler 4, the reboiler steam exchanges heat with the lean absorption liquid, so that the reboiler steam is condensed to become a condensate. The condensate of the reboiler steam flows into the condensate drum 17 via the condensate line 19 after flowing out from the reboiler 4. The condensate in the condensate drum 17 is supplied to a reuse facility (not shown) or the like by the condensate pump 18.

The saturated steam generated by the above-described operation rises in the regeneration tower 3 and flows out from the tower top of the regeneration tower 3 as a wet recovery gas. The wet recovery gas flowing out from the tower top of the regeneration tower 3 flows through the wet recovery gas line 20 and is cooled by the cooler 22. The cooled wet recovery gas flows into the gas-liquid separator 21. When the wet recovery gas is cooled, a component having a low boiling point (mainly water) is condensed, while carbon dioxide remains in the form of a gas. For this reason, in the gas-liquid separator 21, the condensate and the gas are in a state of gas-liquid separation. The dry recovery gas, which is mainly carbon dioxide, flows out from the tower top of the gas-liquid separator 21 and is supplied to a device (not shown) via the dry recovery gas line 23. On the other hand, the condensate is extracted from the tower bottom of the gas-liquid separator 21 by the pump 25, is returned to the regeneration tower 3 via the condensate line 24, and falls inside the regeneration tower 3. When the condensate falls inside the regeneration tower 3, the condensate comes into contact with the saturated steam containing amine in the rinsing portion 3b, and collects the amine while rinsing the saturated steam. The saturated steam rinsed in the rinsing portion 3b flows out from the tower top of the regeneration tower 3 as the wet recovery gas as described above.

The lean absorption liquid in the regeneration tower 3 is also extracted from the tower bottom of the regeneration tower 3 by the lean absorption liquid pump 11 and flows through the lean absorption liquid line 8. The lean absorption liquid flowing through the lean absorption liquid line 8 is cooled by exchanging heat with the rich absorption liquid flowing through the rich absorption liquid line 7 in the heat exchanger 9. The lean absorption liquid cooled in the heat exchanger 9 flows into the absorption tower 2 and falls inside the absorption tower 2 as described above.

In order to remove the non-volatile substance from the lean absorption liquid (to regenerate the lean absorption liquid), the lean absorption liquid is supplied to the reclaimer 30 via the branch line 31 by regulating an opening degree of the flow regulation valve 26. In addition, the reclaimer steam is supplied to the reclaimer 30 via the reclaimer steam line 33 by an operation to be described later. The lean absorption liquid is heated by the heat exchange between the lean absorption liquid and the reclaimer steam in the reclaimer 30, and the absorption liquid steam is generated. Since the absorption liquid steam contains almost no non-volatile substances, the concentration of the non-volatile accumulated matter in the lean absorption liquid can be reduced by supplying the absorption liquid steam to the regeneration tower 3 via the absorption liquid steam line 32.

Since the heat exchange is performed between the reclaimer steam and the lean absorption liquid in the reclaimer 30, the reclaimer steam is condensed into condensate. The condensate of the reclaimer steam flows out from the reclaimer 30 and then flows into the condensate drum 36 via the condensate line 34. The condensate in the condensate drum 36 flows into the condensate line 19 between the condensate drum 17 and the condensate pump 18 by the condensate pump 37, is supplied to and mixed with the condensate of the reboiler steam flowing out from the condensate drum 17, and is supplied to a reuse facility (not shown) or the like. In Embodiment 1, even when a pressure of the condensate of the reclaimer steam flowing out from the reclaimer 30 is equal to or lower than a pressure of the condensate of the reboiler steam flowing out from the reboiler 4, the pressure of the condensate of the reclaimer steam is increased by the condensate pump 37. Therefore, the condensate of the reclaimer steam can be sent to the downstream side.

In a case where the regeneration operation of the lean absorption liquid is to be ended, the supply of the lean absorption liquid to the reclaimer 30 is stopped by fully closing the flow regulation valve 26, and the supply of the reclaimer steam to the reclaimer 30 is stopped by an operation to be described later.

Next, an operation of supplying reboiler steam to the reboiler 4 and an operation of supplying reclaimer steam to the reclaimer 30 will be described. The steam extracted from the steam turbine 100a is supplied to the reboiler 4 as reboiler steam via the reboiler steam line 16. **In** a case of regenerating the lean absorption liquid, by regulating an opening degree of the second flow regulation valve 40, a part of the reboiler steam flowing through the reboiler steam line 16 flows through the reclaimer steam line 33 at a flow rate corresponding to the opening degree of the second flow regulation valve 40. The steam flowing through the reclaimer steam line 33 is supplied to the reclaimer 30 as reclaimer steam. However, the reclaimer steam is supplied to the reclaimer 30 via the reclaimer steam line 33 after being compressed by the first compressor 35. Accordingly, the reclaimer steam is supplied to the reclaimer 30 in a state where the pressure is higher than that of the steam from the steam turbine 100a. Therefore, the pressure of the steam supplied from the steam turbine 100a may be low. For example, in a case where the steam turbine 100a is composed of a high-pressure turbine, a medium-pressure turbine, and a low-pressure turbine due to a difference in pressure of the steam to be driven, the low-pressure steam having the lowest pressure extracted from the low-pressure turbine can be supplied from the steam turbine 100a. When steam is extracted from the steam turbine 100a, the power generation efficiency decreases. However, by extracting low-pressure steam having a pressure lower than high-pressure steam and medium-pressure steam, a decrease in power generation efficiency can be suppressed as compared with a case where the high-pressure steam or the medium-pressure steam is extracted.

In this way, since the first compressor 35 compresses the reclaimer steam to increase a temperature of the reclaimer steam, the reclaimer steam can be supplied to the reclaimer 30. For this reason, as the steam supplied from the steam supply source 100 to the carbon dioxide recovery system 1, the steam having a low pressure (in Embodiment 1, the low-pressure steam instead of the high-pressure steam or the medium-pressure steam) can be used. Therefore, it is possible to suppress a decrease in operation efficiency of the steam supply source 100 to the carbon dioxide recovery system 1.

The regeneration of the lean absorption liquid is not always performed during the driving of the carbon dioxide recovery system 1, and is intermittently performed. Therefore, when the regeneration of the lean absorption liquid is not performed, it is not necessary to supply the reclaimer steam to the reclaimer 30, and thus it is necessary to deactivate the first compressor 35. When the first compressor 35 is repeatedly activated and deactivated to intermittently regenerate the lean absorption liquid, there is a concern that the first compressor 35 may fail. In contrast, in Embodiment 1, in a case where the regeneration of the lean absorption liquid is not performed, the first flow regulation valve 39 is opened while the second flow regulation valve 40 is fully closed. The opening degree of the first flow regulation valve 39 is regulated to be the minimum flow rate of the first compressor 35. Accordingly, the steam compressed by the first compressor 35 flows through the communication line 38, returns to the reboiler steam line 16, and is supplied to the reboiler 4 as a part of the reboiler steam. Accordingly, even in a case where the regeneration of the lean absorption liquid is not performed, the supply of the reclaimer steam to the reclaimer 30 can be stopped without deactivating the first compressor 35. Regardless of whether or not the regeneration operation of the lean absorption liquid is performed, the first compressor 35 can be kept driven during the driving of the carbon dioxide recovery system 1, the number of times of activating and deactivating the first compressor 35 can be reduced, and thus the risk of failure of the first compressor 35 can be reduced.

In a case where the second compressor 41 is provided in the absorption liquid steam line 32, the pressure of the absorption liquid steam flowing out from the reclaimer 30 is increased by the second compressor 41, and the absorption liquid steam is supplied to the regeneration tower 3. Since the second compressor 41 compresses the absorption liquid steam, a boiling point of the absorption liquid in the reclaimer 30 can be lowered. Therefore, an outlet pressure of the first compressor 35 can be lowered, and as a result, energy consumption of the first compressor 35 can be reduced.

### (Embodiment 2)

Next, a carbon dioxide recovery system according to Embodiment 2 will be described. The carbon dioxide recovery system according to Embodiment 2 is obtained by changing a collection source of reclaimer steam, as compared to Embodiment 1. Further, in Embodiment 2, the same components as those in Embodiment 1 are designated by the same reference signs, and the detailed descriptions thereof will not be repeated.

### <Configuration of Carbon Dioxide Recovery System According to Embodiment 2 of Present Disclosure>

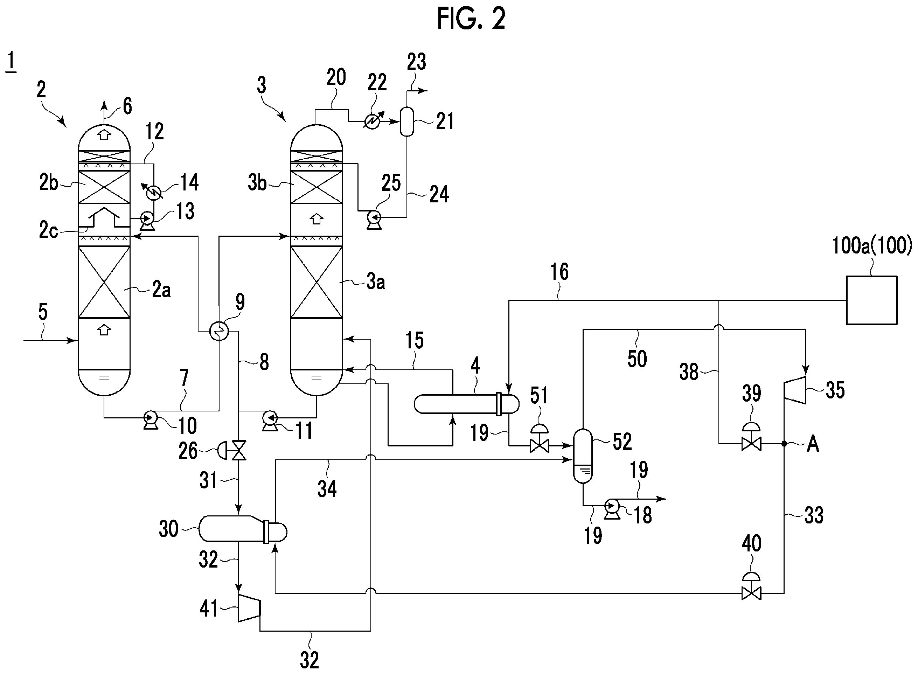

As shown in Fig. 2, in the carbon dioxide recovery system 1 according to Embodiment 2, instead of the condensate drum 17 (refer to Fig. 1), a flash drum 52 that flashes the condensate of the reboiler steam is provided. A depressurization valve 51, which is a depressurization device that reduces the pressure of the condensate of the reboiler steam, is provided in the condensate line 19 between the reboiler 4 and the flash drum 52. The flash drum 52 (preferably the tower top of the flash drum 52) and the first compressor 35 communicate with each other via a flash steam line 50. The condensate line 34 is connected to the flash drum 52. The other configurations are the same as those of Embodiment 1 except that the condensate drum 36 (refer to Fig. 1) and the condensate pump 37 (refer to Fig. 1) are not provided in the condensate line 34.

### <Operation of Carbon Dioxide Recovery System According to Embodiment 2 of Present Disclosure>

Embodiment 2 is different from Embodiment 1 in that the flash steam generated in the flash drum 52 is reclaimer steam. For this reason, the operation of Embodiment 2 will be described below only with respect to points different from those in Embodiment 1.

The condensate of the reboiler steam flowing out from the reboiler 4 flows into the flash drum 52 after being depressurized by the depressurization valve 51 while flowing through the condensate line 19. The depressurized condensate flows into the flash drum 52, so that the condensate is flashed in the flash drum 52, and flash steam is generated. The flash steam flows out from the flash drum 52 and is supplied to the first compressor 35 via the flash steam line 50. The flash steam is compressed by the first compressor 35 as reclaimer steam, and then supplied to the reclaimer 30 to heat the lean absorption liquid by the same operation as in Embodiment 1.

In Embodiment 2, since the reclaimer steam is recycled in the carbon dioxide recovery system 1, an amount of steam supplied from the steam supply source 100 to the carbon dioxide recovery system 1 can be reduced. More specifically, a temperature of the condensed water can be lowered by depressurizing the condensate of the reclaimer steam and the condensate of the reboiler steam in the flash drum 52, and as a result, enthalpy that can be extracted from steam of an unit steam amount increases, so that an amount of steam supplied from the supply source 100 can be reduced. In this manner, it is possible to suppress a decrease in operation efficiency of the supply source 100 due to the supply of the steam to the carbon dioxide recovery system 1.

Since the heat exchange is performed between the reclaimer steam and the lean absorption liquid in the reclaimer 30, the reclaimer steam is condensed into condensate. The condensate of the reclaimer steam is supplied to the flash drum 52 via the condensate line 34 after flowing out from the reclaimer 30. Since the pressure in the flash drum 52 can be made lower than the pressure of the reboiler 4 by depressurizing the condensate of the reboiler steam in the flash drum 52, the condensate of the reclaimer steam can be sent to the flash drum 52 without providing a pump (corresponding to the condensate pump 37 of Embodiment 1) for increasing the pressure of the condensate of the reclaimer steam in the condensate line 34.

### <Modification Example of Carbon Dioxide Recovery System According to Embodiment 2 of Present Disclosure>

In Embodiment 2, a total amount of flash steam is used as the reclaimer steam, but the present disclosure is not limited to this embodiment. In a case where the pressure in the flash drum 52 is kept constant, the amount of flash steam generated in the flash drum 52 is constant. Therefore, the generated steam may be distributed to the reclaimer steam and the reboiler steam. In addition, the regulation function is provided in the first compressor 35, the pressure in the flash drum 52 is regulated, and a steam amount required for the reclaimer can be flashed.

### (Embodiment 3)

Next, a carbon dioxide recovery system according to Embodiment 3 will be described. The carbon dioxide recovery system according to Embodiment 3 is obtained by adding a compressor for compressing the steam supplied from the steam turbine 100a to each of Embodiments 1 and 2. In the following description, Embodiment 3 will be described with a configuration in which a compressor is added to Embodiment 2. However, Embodiment 3 may be configured by adding a compressor to Embodiment 1. Further, in Embodiment 3, the same components as those in Embodiment 2 are designated by the same reference signs, and the detailed descriptions thereof will not be repeated.

### <Configuration of Carbon Dioxide Recovery System According to Embodiment 3 of Present Disclosure>

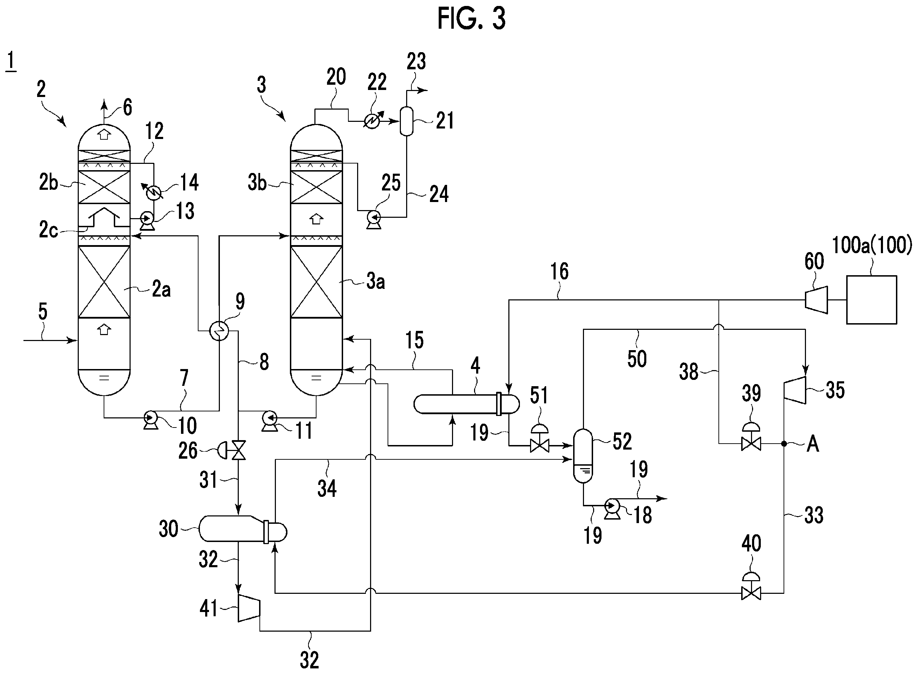

As shown in Fig. 3, in the carbon dioxide recovery system 1 according to Embodiment 3, a third compressor 60 that compresses the steam supplied from the steam turbine 100a is provided in the reboiler steam line 16. Other configurations are the same as those in Embodiment 2.

### <Operation of Carbon Dioxide Recovery System According to Embodiment 3 of Present Disclosure>

The operation of Embodiment 3 is different from the operation of Embodiment 2 only in that the reboiler steam is supplied to the reboiler 4 after being compressed by the third compressor, and the other operations are the same as the operation of Embodiment 2. Even in a case where the pressure of the steam from the steam turbine 100a is low and the temperature required in the reclaimer 30 or the reboiler 4 is not satisfied, the steam can be used as a heat source in the reclaimer 30 or the reboiler 4 by compressing the steam with the third compressor 60. Accordingly, as the steam supplied from the steam turbine 100a, it is not necessary to change from the low-pressure steam to the medium-pressure steam or the high-pressure steam, and thus it is possible to suppress a decrease in operation efficiency of the steam turbine 100a.

### <Modification Example of Carbon Dioxide Recovery System According to Embodiments 1 to 3 of Present Disclosure>

In Embodiments 1 to 3, the supply source 100 is the steam turbine 100a, but the present disclosure is not limited to this embodiment. The device may have any configuration as long as it is a device that generates steam or uses steam, and may be, for example, a boiler or the like.

In Embodiments 1 to 3, the device in which the absorption tower 2 is provided as an example has been described. However, the absorption tower 2 does not necessarily need to be provided, and is not an essential configuration.

The contents described in each embodiment are understood as follows, for example.

[1] A carbon dioxide recovery system according to one aspect including:
   a regeneration tower (3) that releases carbon dioxide from an absorption liquid that has absorbed the carbon dioxide;
   a reboiler (4) that heats the absorption liquid by exchanging heat between the absorption liquid in the regeneration tower (3) and reboiler steam;
   a reclaimer (30) that heats the absorption liquid by exchanging heat between the absorption liquid supplied from the regeneration tower (3) and reclaimer steam to generate absorption liquid steam, which is steam of the absorption liquid;
   an absorption liquid steam line (32) for supplying the absorption liquid steam generated by the reclaimer (30) to the regeneration tower (3); and
   a first compressor (35) that compresses the reclaimer steam before supplying the reclaimer steam to the reclaimer (30).
   According to the carbon dioxide recovery system of the present disclosure, the first compressor can increase a pressure of the reclaimer steam by compressing the reclaimer steam, and supply the reclaimer steam to the reclaimer. For this reason, since steam having a low pressure can be used as steam supplied from a steam supply source to the carbon dioxide recovery system, it is possible to suppress a decrease in operation efficiency of the steam supply source to the carbon dioxide recovery system.
[2] A carbon dioxide recovery system according to another aspect is the carbon dioxide recovery system according to [1], the carbon dioxide recovery system further including:
   a reboiler steam line (16) that supplies the reboiler steam to the reboiler (4);
   a reclaimer steam line (33) that branches from the reboiler steam line (16), is connected to the reclaimer (30), and is provided with the first compressor (35);
   a communication line (38) that allows the reboiler steam line (16) and the reclaimer steam line (33) to communicate with each other, the reclaimer steam line (33) being located on a downstream side of the first compressor (35);
   a first flow regulation device (first flow regulation valve 39) that is provided in the communication line (38) and regulates a flow rate of the reclaimer steam flowing through the communication line (38); and
   a second flow regulation device (second flow regulation valve 40) that is provided in the reclaimer steam line (33) on the downstream side of a connection portion (A) between the reclaimer steam line (33) and the communication line (38), and regulates the flow rate of the reclaimer steam flowing through the reclaimer steam line (33).
   According to such a configuration, at least a part of the reclaimer steam compressed by the first compressor can be supplied to the reboiler as the reboiler steam. Therefore, even when the operation of the reclaimer is stopped, the first compressor can continue to be driven. Accordingly, the number of times the first compressor is activated and deactivated can be reduced, so that the risk of failure of the first compressor can be reduced.
[3] The carbon dioxide recovery system according to still another aspect is the carbon dioxide recovery system according to [1] or [2],
   in which a second compressor (41) that compresses the absorption liquid steam is provided in the absorption liquid steam line (32).
   According to such a configuration, the second compressor compresses the absorption liquid steam, so that a boiling point of the absorption liquid in the reclaimer can be lowered. Therefore, an outlet pressure of the first compressor can be lowered, and as a result, energy consumption of the first compressor can be reduced.
[4] The carbon dioxide recovery system according to still another aspect is the carbon dioxide recovery system according to any one of [1] to [3],
   in which the reclaimer steam is a part of the reboiler steam before being supplied to the reboiler (4).
   According to such a configuration, even in a case where a steam pressure required for the reclaimer is higher than a steam pressure required for the reboiler, the low-pressure steam can be used as the steam supplied from the steam supply source to the carbon dioxide recovery system. Therefore, it is possible to suppress a decrease in operation efficiency of the steam supply source to the carbon dioxide recovery system.
[5] The carbon dioxide recovery system according to still another aspect is the carbon dioxide recovery system according to [4], the carbon dioxide recovery system further including:
   a condensate drum (17) that stores a condensate of the reboiler steam after heat exchange with the absorption liquid in the reboiler (4);
   a condensate line (34) that supplies a condensate of the reclaimer steam after heat exchange with the absorption liquid in the reclaimer (30) to the condensate of the reboiler steam flowing out from the condensate drum (17); and
   a condensate pump (37) that is provided in the condensate line (34) to increase a pressure of the condensate of the reclaimer steam.
   According to such a configuration, even when a pressure of the condensate of the reclaimer steam flowing out from the reclaimer is equal to or lower than a pressure of the condensate of the reboiler steam flowing out from the reboiler, the pressure of the condensate of the reclaimer steam is increased by the condensate pump. Therefore, the condensate of the reclaimer steam can be sent to the downstream side.
[6] The carbon dioxide recovery system according to still another aspect is the carbon dioxide recovery system according to any one of [1] to [3], the carbon dioxide recovery system further including:
   a flash drum (52) that flashes a condensate of the reboiler steam after heat exchange with the absorption liquid in the reboiler (4);
   a depressurization device (depressurization valve 51) that decompresses the condensate to be supplied from the reboiler (4) to the flash drum (52); and
   a condensate line (34) that supplies a condensate of the reclaimer steam after heat exchange with the absorption liquid in the reclaimer (30) to the flash drum (52),
   in which the reclaimer steam is flash steam generated in the flash drum (52).

According to such a configuration, since the reclaimer steam is recycled in the carbon dioxide recovery system, an amount of steam supplied from the steam supply source to the carbon dioxide recovery system can be reduced. More specifically, a temperature of the condensed water can be lowered by depressurizing the condensate of the reclaimer steam and the condensate of the reboiler steam in the flash drum, and as a result, enthalpy that can be extracted from steam of an unit steam amount increases, so that an amount of steam supplied from the steam supply source to the carbon dioxide recovery system can be reduced. In this manner, it is possible to suppress a decrease in the operation efficiency of the steam supply source to the carbon dioxide recovery system.

According to such a configuration, since the pressure in the flash drum can be made lower than the pressure of the reboiler by depressurizing the condensate of the reboiler steam in the flash drum, the condensate of the reclaimer steam can be sent to the flash drum without providing a pump for increasing the pressure of the condensate of the reclaimer steam in the condensate line.

[7] The carbon dioxide recovery system according to still another aspect is the carbon dioxide recovery system according to any one of [1] to [5], the carbon dioxide recovery system further including:
a third compressor (60) that compresses the reboiler steam before supplying the reboiler steam to the reboiler (4).

According to such a configuration, even in a case where the pressure of the steam from the steam supply source to the carbon dioxide recovery system is low, the steam can be used as a heat source in the reclaimer or the reboiler by compressing the steam with the third compressor.

### Reference Signs List

1: Carbon dioxide recovery system
3: Regeneration tower
4: Reboiler
16: Reboiler steam line
17: Condensate drum
30: Reclaimer
32: Absorption liquid steam line
33: Reclaimer steam line
34: Condensate line
35: First compressor
37: Condensate pump
38: Communication line
39: First flow regulation valve (first flow regulation device)
40: Second flow regulation valve (second flow regulation device)
41: Second compressor
51: Depressurization valve (depressurization device)
52: Flash drum
60: Third compressor

## Claims

1. A carbon dioxide recovery system comprising:
a regeneration tower that releases carbon dioxide from an absorption liquid that has absorbed the carbon dioxide;
a reboiler that heats the absorption liquid by exchanging heat between the absorption liquid in the regeneration tower and reboiler steam;
a reclaimer that heats the absorption liquid by exchanging heat between the absorption liquid supplied from the regeneration tower and reclaimer steam to generate absorption liquid steam, which is steam of the absorption liquid;
an absorption liquid steam line for supplying the absorption liquid steam generated by the reclaimer to the regeneration tower; and
a first compressor that compresses the reclaimer steam before supplying the re claimer steam to the reclaimer.

2. The carbon dioxide recovery system according to Claim 1, further comprising:
a reboiler steam line for supplying the reboiler steam to the reboiler;
a reclaimer steam line that branches from the reboiler steam line, is connected to the reclaimer, and is provided with the first compressor;
a communication line that allows the reboiler steam line and the reclaimer steam line to communicate with each other, the reclaimer steam line being located on a downstream side of the first compressor;
a first flow regulation device that is provided in the communication line and regulates a flow rate of the reclaimer steam flowing through the communication line; and
a second flow regulation device that is provided in the reclaimer steam line on a downstream side of a connection portion between the reclaimer steam line and the communication line, and regulates the flow rate of the reclaimer steam flowing through the reclaimer steam line.

3. The carbon dioxide recovery system according to Claim 1 or 2,
wherein a second compressor that compresses the absorption liquid steam is provided in the absorption liquid steam line.

4. The carbon dioxide recovery system according to Claim 1 or 2,
wherein the reclaimer steam is a part of the reboiler steam before being supplied to the reboiler.

5. The carbon dioxide recovery system according to Claim 4, further comprising:
a condensate drum that stores a condensate of the reboiler steam after heat exchange with the absorption liquid in the reboiler;
a condensate line that supplies a condensate of the reclaimer steam after heat exchange with the absorption liquid in the reclaimer to the condensate of the reboiler steam flowing out from the condensate drum; and
a condensate pump that is provided in the condensate line to increase a pressure of the condensate of the reclaimer steam.

6. The carbon dioxide recovery system according to Claim 1 or 2, further comprising:
a flash drum that flashes a condensate of the reboiler steam after heat exchange with the absorption liquid in the reboiler;
a depressurization device that decompresses the condensate to be supplied from the reboiler to the flash drum; and
a condensate line that supplies a condensate of the reclaimer steam after heat exchange with the absorption liquid in the reclaimer to the flash drum,
wherein the reclaimer steam is flash steam generated in the flash drum.

7. The carbon dioxide recovery system according to Claim 1 or 2, further comprising:
a third compressor that compresses the reboiler steam before supplying the reboiler steam to the reboiler.
